# EUROPÄISCHE PATENTSCHRIFT

(11) **EP 0 423 258 B1**
(45) Veröffentlichungstag und Bekanntmachung des Hinweises auf die Patenterteilung: **12.01.1994**
(21) Anmeldenummer: 90903149.4
(22) Anmeldetag: 20.02.1990
(51) Int. Cl.: G01M 3/18

(54) **KABEL ZUR ORTUNG VON FLÜSSIGKEITEN**
CABLE FOR LOCATING FLUIDS
CABLE DE REPERAGE DE LIQUIDES

(30) Priorität: 22.02.1989 DE 8902072 U
(43) Veröffentlichungstag der Anmeldung: 24.04.1991
(73) Patentinhaber: Kabelwerke Reinshagen GmbH, D-42369 Wuppertal (DE)
(72) Erfinder: TAUSCH, Norbert, D-5650 Solingen 25 (DE); DIEGMANN, Wolfgang, D-5600 Wuppertal 1 (DE)
(74) Vertreter: Priebisch, Rüdiger, Dipl.-Ing., Dipl.-Wirtsch.-Ing. (FH)
(86) Internationale Anmeldenummer: DE9000113
(87) Internationale Veröffentlichungsnummer: WO9010208

(56) Entgegenhaltungen:
- EP-A- 0 029 685
- EP-A- 0 245 753
- WO-A-86/07483
- DE-U- 8 902 072
- FR-A- 2 287 646
- Patent Abstracts of Japan, vol. 10, no. 169 (P-468)(2225), 14 June 1986, & JP-A-6122226
- Patent Abstracts of Japan, vol. 6, no. 198 (P-147)(1076), 7 October 1982, & JP-A-57106838
- Patent Abstracts of Japan, vol. 5, no. 107 (P-70)(779), 11 July 1981, & JP-A-5648533

## Beschreibung

Die Erfindung betrifft ein Kabel zur Ortung von Flüssigkeiten, bei dem bei Zutritt von Flüssigkeit eine physikalische Änderung am Kabelaufbau an der Leckstelle eintritt, die gemessen und ausgewertet wird.

Kabel zur Ortung von Flüssigkeiten finden z.B. Anwendung bei der Überwachung der Lagerung und des Transports von Flüssigkeiten, die schädliche Auswirkungen auf die Umwelt, und hier insbesondere auf die Luft, den Erdboden und das Grundwasser, haben können. Hierzu zählen z.B. Pipelines oder Tanks für Öle, Treibstoffe und Chemikalien verschiedenster Art. Bekannt sind hierzu Kabel, bei denen sich die elektrischen Eigenschaften im Bereich der zu ortenden Flüssigkeiten ändern. Diese Änderungen werden meßtechnisch erfaßt und dienen zur Ermittlung der Lage des Leckageortes.

Die bisher bekanntgewordenen Meßverfahren und Kabel sind teuer und von ihrer Einsatzlänge her stark begrenzt einsetzbar. Bei wäßrigen Flüssigkeiten ist die Detektierbarkeit mit elektrischen Verfahren gut und die Erfassung des Leckageortes mit einfachen Mitteln möglich. Die hierzu bekannten Verfahren sind jedoch anfällig, insbesondere gegenüber elektromagnetischen Störungen. Zudem sind sie aufgrund der Querleitfähigkeit der Isolierstoffe in ihrer Länge stark begrenzt einsetzbar. Bei der Ortung von Flüssigkeiten auf der Basis von Kohlenwasserstoffen läßt sich durch Änderung der dielektrischen Eigenschaften von Leitungen am Leckageort grundsätzlich auch diese ermitteln. Probleme bereitet jedoch hier die Tatsache, daß die zu ortenden Flüssigkeiten in ihren -insbesondere dielektrischen-Eigenschaften den Isolierwerkstoffen sehr ähneln. Eine sichere Ortung ist daher nur bei Vorliegen von großen Benetzungslängen oder über kleine Meßkabellängen möglich.

Aus der EP-A-0245753 ist es bekannt, ein Kabel nach der Präambel des Patentanspruchs 1 auszubilden. Als Kernelement dient eine optische Faser. Das äußere Geflecht ist so aufgebaut, daß es das quellende Material an einer radialen Ausdehnung hindert. Folglich übt das quellende Material einen Druck auf die optische Faser aus, der zu einer Biegung der Faser im Mikrobereich führt. Diese Biegung bewirkt eine Dämpfung der durch die Faser geführten Lichtmenge. Die Dämpfung kann dann meßtechnisch ausgewertet werden.
Diese Anordnung erfordert einen großen meßtechnischen Aufwand, insbesondere, wenn längere Strecken überwacht werden sollen.

Der Erfindung liegt das Bestreben zugrunde, ein Kabel zur Ortung von Flüssigkeiten zu schaffen, das schnell und sicher eine Anwesenheit von Flüssigkeit verschiedenster Art anzeigt und dabei eine genaue Ortung des Leckageortes über eine wesentlich größere Entfernung als bisher zuläßt.

Diese Anforderungen werden bei einem Kabel zur Ortung von Flüssigkeiten, bei dem bei Zutritt von Flüssigkeit eine physikalische Änderung an Kabelaufbau an der Leckstelle eintritt, die gemessen und ausgewertet wird, mit
a) einem Kernelement, das empfindlich auf Zug oder Biegung reagiert;
b) einerersten Umhüllung aus einem in der zu ortenden Flüssigkeit quellenden Material und
c) einer fest auf der ersten Umhüllung sitzenden zweiten Umhüllung aus einem dichten Geflecht aus hochfestem Garn mit geringer Dehnung, dadurch erfüllt, daß
   der Geflechtswinkel α größer oder kleiner ist als der sogenannte Neutralwinkel und diese Abweichung sogroß ist, daß das Kernelement (1) infolge der Quellung zerbrochen oder Zerrissen wird.

Gegen mechanische äußere Einflüsse kann eine dritte Schutzumhüllung aus einem für die zu ortende Flüssigkeit durchdringbarem Material bzw. mit einen für die zu ortende Flüssigkeit durchdringbarem Aufbau dienen. Zur sicheren Anzeige kann das Material der dritten Schutzumhüllung in der zu ortenden Flüssigkeit in Lösung gehen. Um ein radiales Durchtreten des Quellmittels durch das Geflecht,insbesondere bei niedrigviskosem Quellmaterial, sicher auszuschließen,kann zwischen der ersten und der zweiten Umhüllung eine Zwischenschicht angeordnet sein, die für die zu ortende Flüssigkeit zwar durchgängig ist, jedoch das quellende Material daran hindert, das Geflecht zu durchdringen.
Diese Zwischenschicht kann z.B. aus einem hochfesten, saugfähigem Vlies bestehen und in Bandform aufgebracht sein. Je nach der zu ortenden Flüssigkeit kann das quellende Material ein Polymer, ein Elastomer, insbesondere ein Silikon, oder ein Gemisch hieraus, oder eine Materialmischung mit mindestens einem Anteil an diesen Materialien sein. Das quellende Material kann insbesondere aufextrudiert oder aber in Bandform, insbesondere in Form eines Quellvlieses oder Quellpulvers, das auf oder in ein Band eingebracht wurde, erfolgen. Bei wässrigen zu ortenden Flüssigkeiten bietet sich ein Material auf Cellulosebasis an.
Das Geflecht kann aus einem Garn aus Glasseide, Polyaramid, Karbonfasern oder ähnlichem gebildet sein.
Als offenporige äußere Schutzumhüllung kann ein Geflecht oder eine offenporige Kunststoffhülle verwendet werden. Als Kernelement kann ein geeigneter empfindlicher dünner elektrischer Leiter verwendet werden.
Wird als Kernelement ein Lichtleiter, insbesondere in Form einer Lichtleitfaser, verwendet, können sehr lange Strecken überwacht werden. Die Lichtleitfaser kann lose in einem Röhrchen oder fest von einer Schutzhülle umgeben sein. Dann kann die Knickung, d.h. der Bruch, der Lichtleitfaser zu einer sicheren, insbesonders elektrisch und elektromagnetisch störungsfreien Auswertung dienen, insbesonders mittels eines bekannten OTDR-Meßvorrichtung. Desgleichen ist der Einsatz in explosionsgefährdeten Bereichen uneingeschränkt möglich. Die Ortung ist mit einer Genauigkeit unter 1% Abweichung möglich,und das äußerst dünne Lichtleiterkabel benötigt bei einem Durchmesser von ca. 1,5mm nur einen geringen Verlegeplatz bzw. -aufwand.
Als wesentliches Merkmal der Erfindung ist der Umstand zu sehen, daß das entsprechend den Anforderungen gewählte Kernelement sehr schnell zerbrochen wird. Durch den Bruch ist die Stelle, an dem die Flüssigkeit an das Kabel tritt, in jedem Fall sowie sicher und schnell festzustellen, sei es über elektrische, sei es durch optische Meßverfahren.

In der Zeichnung ist ein Ausführungsbeispiel der Erfindung dargestellt, das im nachfolgenden in Verbindung mit den Figuren beschrieben wird.
Figur 1 zeigt einen Abschnitt eines erfindungsgemäßen Kabels mit einem äußeren Geflecht, ohne Schutzumhüllung.
Figur 2 zeigt das Kabel nach Figur 1, wenn es bei Zutritt von Flüssigkeit aufquillt und sich axial zusammenzieht.
Figur 3 zeigt das Kabel nach Figur 1, nachdem die Kontraktion des Geflechts zu einem Ausknicken des Kernelements geführt hat.

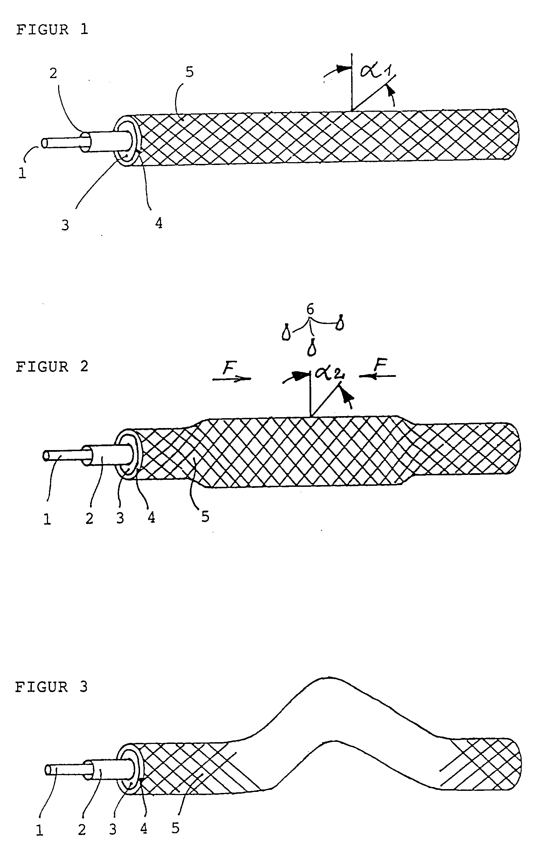

Mit 1 ist das Kernelement bezeichnet, das hier als lose Lichtleitfaser in einem Schutzröhrchen 2 aus Kunststoff gelagert ist. Für die Überwachung von kurzen Strecken kann ein Kunststoff für die Faser gewählt werden; für längere Strecken wird eine dämpfungsärmere Glasfaser gewählt, Es sind jedoch auch festumhüllte Lichtleitfasern oder ein elektrisch leitender Draht aus bruchempfindlichem Material möglich.
Das Schutzröhrchen 2 ist von einer quellfähigen Umhüllung 3 umgeben. Diese kann aufextrudiert oder in Bandform aufgebracht sein. Sie kann aus einem Polymer, einem Elastomer oder einem Quellvlies oder einem Quellband bestehen. Bei der Ortung von Kohlenwasserstoffen, wie Ölen, Lösungsmitteln, Treibstof£en und dergleichen, kann z.B. Silikon oder ein ähnliches Elastomer eingesetzt werden. Bei der Detektion von wässrigen Flüssigkeiten können in Wasser quellende Mittel, z.B. auf der Basis von Zellulose und dergleichen, verwendet werden.
Über die Umhüllung 3 ist eine Schicht 4 aus einem hochfesten, saugfähigem Vlies angeordnet. Diese sorgt - je nach Wahl des quellfähigen Materials und der zu ortenden Flüssigkeit - dafür, daß das Quellmittel nicht radial in das aufzubringende Geflecht 5 dringen kann, sondern nur zusammen mit dem Geflecht 5 sich radial ausdehnt, wenn die Flüssigkeit zutritt. Das Geflecht 5 hat einen bestimmten Geflechtswinkel α₁, der größer ist als der sogenannte neutrale Geflechtswinkel. Darüber ist zum Schutz des Geflechts 5 eine offenporige, d.h. für die zu ortende Flüssigkeit durchdringbare Schutzumhüllung aufgebracht (nicht dargestellt).
Das Geflecht hat folgenden Aufbau:
Glasseide EC9, 68 tex/1. Fachung: 1/2-fach. Spulen: 16.
Flechten: 9,6. Bedeckung: 89,9 %. Flechtwinkel: 64,8 Grad.
Die Wirkungsweise ist anhand der Figuren 2 und 3 erläutert:
Bei Kontakt mit der eine Quellung erzeugenden Flüssigkeit 6 will sich die Umhüllung 3 ausdehnen. Es wird ein radialer Druck auf die Schicht 4 und das Geflecht 5 ausgeübt. Durch das radiale Aufweiten des Geflechts 5 tritt eine Verkürzung des Geflechts 5 in die Richtung F ein. Der Geflechtswinkel α₁ wird kleiner. Dadurch tritt eine Stauchung des Röhrchens 2 und der Lichtleitfaser 1 auf. Diese Stauchung führt schließlich dazu. daß die Lichtleitfaser 1 unterhalb des Geflechts 5 ausknickt, vergleiche Figur 3. Dabei ergibt sich eine unregelmäßige Anordnung des Geflechts 5 in diesem Bereich, eine Art Ausbeulung, vergleiche Figur 3.Das Ausknicken führt zum Bruch der empfindlichen Lichtleitfaser 1. Dieser Bruch dient nun als sichere physikalische Größe zur Feststellung des Bruchortes und somit des gesuchten Leckageortes. Die Auswertung kann dann z.B. mit bekannten OTDR-Meßvorrichtungen sicher und genau erfolgen.
Zum Geflechtswinkel α:
Aus der Druckschlauchtechnik und der Kabeltechnik ist folgende Gesetzmäßigkeit bekannt:
Beträgt der Flechtwinkel ca. 35 Grad, ist der sog. Neutralwinkel eingestellt. D.h., bei Innendruck wird sich die Umflechtung, die letztlich einen Schlauch darstellt, weder längen noch kürzen. Ist der Flechtwinkel größer als der Neutralwinkel, wird sich der aufgeflochtene Schlauch bei Innendruck ausweiten,d.h. sein Durchmesser wird größer, wobei eine Verkürzung eintritt. Ist der Flechtwinkel kleiner als der Neutralwinkel, wird der Durchmesser bei Innendruck kleiner und der Geflechtsschlauch länger.
Da im Ausführungsbeisbiel bei Quellung eine Knickung der Faser 1 gewünscht wird, ist der Flechtwinkel größer als 35 Grad, hier 64,8 Grad. Falls in einem anderen Fall nicht ein Ausknicken und folglich Brechen, sondern ein Zerreißen infolge Zugbelastung gewünscht wird, wird der Flechtwinkel erfindungsgemäß kleiner gewählt als der Neutralwinkel: Die Folge ist dann eine Verlängerung des Geflechtsschlauches beim Aufquellen, bis der umschlossene Draht oder dergl.
zerrissen wird.

## Patentansprüche

1. Kabel zur Ortung von Flüssigkeiten, bei dem bei Zutritt von Flüssigkeit eine physikalische Änderung am Kabelaufbau an der Leckstelle eintritt, die gemessen und ausgewertet wird, mit
a) einem Kernelement (1),das empfindlich auf Zug oder Biegung reagiert,
b) einer ersten Umhüllung (3) aus einem in der zu ortenden Flüssigkeit (6) quellenden Material und
c) einer fest auf der ersten Umhüllung (3) sitzenden zweiten Umhüllung (5) aus einem dichten Geflecht aus hochfestem Garn mit geringer Dehnung, dadurch gekennzeichnet, daß der Flechtwinkel (α) größer oder kleiner ist als der sogenannte Neutralwinkel und diese Abweichung so groß ist, daß das Kernelement (1) infolge der Quellung zerbrochen oder zerrissen wird.

2. Kabel nach Anspruch 1, gekennzeichnet durch eine dritte Schutzumhüllung aus einem für die zu ortende Flüssigkeit (6) durchdringbarem Material bzw. mit einem für die zu ortende Flüssigkeit (6) durchdringbarem Aufbau.

3. Kabel nach Anspruch 1 oder 2, gekennzeichnet durch eine dritte Schutzumhüllung aus einem Material, das in der zu ortenden Flüssigkeit (6) in Lösung geht.

4. Kabel nach einem der Ansprüche 1 bis 3, dadurch gekennzeichnet, daß zwischen der ersten (3) und der zweiten Umhüllung (5) eine Zwischenschicht (4) angeordnet ist, die für die zu ortende Flüssigkeit durchgängig ist, jedoch das quellende Material daran hindert, das Geflecht (5) zu durchdringen.

5. Kabel nach Anspruch 4, dadurch gekennzeichnet, daß die Zwischenschicht (4) aus einem hochfesten, saugfähigem Vlies besteht.

6. Kabel nach einem der Ansprüche 1 bis 5, dadurch gekennzeichnet, daß als quellendes Material (3) ein Polymer, ein Elastomer, insbesondere ein Silikon, oder ein Gemisch hieraus, oder eine Materialmischung mit einem Anteil an diesen Materialien verwendet ist.

7. Kabel nach einem der Ansprüche 1 bis 5, dadurch gekennzeichnet, daß als quellendes Material ein Quellvlies oder ein Quellpulver, insbesondere auf Cellulosebasis, verwendet ist.

8. Kabelnach einem der Ansprüche 1 bis 8, dadurch gekennzeichnet, daß das Geflecht (5) aus einem Garn aus Glasseide, Polyaramid oder Karbonfasern gebildet ist.

9. Kabel nach einem der Ansprüche 2 bis 8, dadurch gekennzeichnet, daß als dritte Schutzumhüllung ein Geflecht verwendet ist.

10. Kabel nach einem der Ansprüche 2 bis 8, dadurch gekennzeichnet, daß als dritte Schutzumhüllung eine Kunststoffhülle verwendet ist.

11. Kabel nach einem der Ansprüche 1 bis 10, dadurch gekennzeichnet, daß als Kernelement mindestens ein dünner elektrischer Leiter verwendet ist.

12. Kabel nach einem der Ansprüche 1 bis 10, dadurch gekennzeichnet, daß als Kernelement mindestens eine Lichtleitfaser verwendet ist.

## Claims

1. A cable for detecting liquids, wherein a physical change occurs in the cable structure at the leakage point when liquid enters, the leakage point being measured and evaluated, comprising
a) a core element (1) which reacts sensitively to traction or flexion,
b) a first covering (3) made of a material which swells in the liquid (6) to be detected, and
c) a second covering (5) which lies firmly against the first covering (3) and is made of a dense mesh of high-strength, low-stretch yarn, characterised in that the mesh angle (α) is greater or smaller than the neutral angle, as it is called, and the amount of this difference is such that the core element (1) is broken or torn as a result of the swelling.

2. A cable according to claim 1, characterised by a third protective covering made of a material which can be permeated by the liquid (6) to be detected or having a structure which can be permeated by the liquid (6) to be detected.

3. A cable according to claim 1 or 2, characterised by a third protective covering made of a material which dissolves in the liquid (6) to be detected.

4. A cable according to any one of claims 1 to 3, characterised in that an intermediate layer (4) is arranged between the first (3) and the second covering (5), the said intermediate layer (4) allowing the liquid to be detected to pass through but preventing the swelling material from permeating the mesh (5).

5. A cable according to claim 4, characterised in that the intermediate layer (4) comprises a high-strength, absorbent non-woven fabric.

6. A cable according to any one of claims 1 to 5, characterised in that a polymer, an elastomer, in particular a silicone, or a mix thereof, or a mixture comprising a proportion of these materials is used as swelling material (3).

7. A cable according to any one of claims 1 to 5, characterised in that a swelling non-woven fabric or a swelling powder, in particular cellulose-based, is used as swelling material.

8. A cable according to any one of claims 1 to 8, characterised in that the mesh (5) is formed of a yarn made of glass silk, polyaramide or carbon fibres.

9. A cable according to any one of claims 2 to 8, characterised in that a mesh is used as third protective covering.

10. A cable according to any one of claims 2 to 8, characterised in that a plastics sheath is used as third protective covering.

11. A cable according to any one of claims 1 to 1 0, characterised in that at least one thin electrical conductor is used as a core element.

12. A cable according to any one of claims 1 to 10, characterised in that at least one light-conducting fibre is used as a core element.

## Revendications

1. Câble de repérage de liquides dans lequel une modification physique de la structure du câble a lieu à l'emplacement de la fuite lors de l'arrivée d'un liquide, modification qui est mesurée et évaluée, et qui comprend
a) un élément de coeur (1) qui réagit sensiblement à la traction ou à la flexion ;
b) une première enveloppe (3) en un matériau qui gonfle dans le liquide à repérer (6), et
c) une seconde enveloppe (5) placée de façon fixe sur la première enveloppe (3) et constituée par une tresse dense en fil très résistant et à faible allongement,
caractérisé en ce que
l'angle de tresse (α) est supérieur ou inférieur à l'angle dit neutre et en ce que cette différence est suffisamment importante pour que l'élément de coeur (1) se brise ou se déchire du fait du gonflement.

2. Câble selon la revendication 1, caractérisé par une troisième enveloppe de protection constituée en un matériau pouvant être traversé par le liquide (6) à repérer, ou présentant une structure pouvant être traversée par le liquide (6) à repérer.

3. Câble selon la revendication 1 ou 2, caractérisé par une troisième enveloppe de protection en un matériau qui se dissout dans le liquide (6) à repérer.

4. Câble selon l'une quelconque des revendications 1 à 3, caractérisé en ce qu'une couche intermédiaire (4) est disposée entre la première enveloppe (3) et la seconde enveloppe (5), qui peut être traversée par le liquide à repérer mais qui empêche le matériau gonflant de traverser la tresse (5).

5. Câble selon la revendication 4, caractérisé en ce que la couche intermédiaire (4) est constituée par un feutre très résistant et absorbant.

6. Câble selon l'une quelconque des revendications 1 à 5, caractérisé en ce qu'on utilise en tant que matériau gonflant (3) un polymère, un élastomère, notamment un silicone, ou un mélange de ceux-ci, ou un mélange de substances comprenant une fraction de ces matériaux.

7. Câble selon l'une quelconque des revendications 1 à 5, caractérisé en ce qu'on utilise en tant que matériau gonflant un feutre gonflant ou une poudre gonflante, notamment à base de cellulose.

8. Câble selon l'une quelconque des revendications 1 à 7, caractérisé en ce que la tresse (5) est constituée en fibres de verre, en polyaramide ou en fibres de carbone.

9. Câble selon l'une quelconque des revendications 2 à 8, caractérisé en ce qu'on utilise une tresse en tant que troisième enveloppe de protection.

10. Câble selon l'une quelconque des revendications 2 à 8, caractérisé en ce qu'on utilise une enveloppe en matière synthétique en tant que troisième enveloppe de protection.

11. Câble selon l'une quelconque des revendications 1 à 10, caractérisé en ce que l'on utilise en tant qu'élément de coeur au moins un fin conducteur électrique.

12. Câble selon l'une quelconque des revendications 1 à 10, caractérisé en ce que l'on utilise en tant qu'élément de coeur au moins une fibre optique.
